# EUROPEAN PATENT SPECIFICATION

(11) **EP 3 307 446 B1**
(45) Date of publication and mention of the grant of the patent: **29.07.2020**
(21) Application number: 16747845.2
(22) Date of filing: 10.06.2016
(51) Int. Cl.: B09B 1/00, B65D 21/02, B65D 21/04, B65D 25/02, B65D 25/04

(54) **CONTAINER FOR HOLDING ON THE INSIDE, AT LEAST ONE RECEPTACLE CONTAINING, IN TURN, DANGEROUS MATERIALS AND WASTE CONTAINING SYSTEM WITH SUCH CONTAINERS.**
NBEHÄLTER ZUR AUFNAHME VON MINDESTENS EINEM GEFAHRGUTHALTIGEN BEHÄLTER IN SEINEM INNEREN UND ABFALLENTSORGUNGSSYSTEM MIT SOLCHEN BEHÄLTERN.
CONTENEUR COMPRENANT, À L'INTÉRIEUR, AU MOINS UN RÉCEPTACLE CONTENANT À SON TOUR DES MATÉRIAUX DANGEREUX ET SYSTÈME DE STOCKAGE DE DÉCHETS ÉQUIPÉ DE TELS CONTENEURS.

(30) Priority: 10.06.2015 IT UB20150933
(43) Date of publication of application: 18.04.2018
(73) Proprietor: Comecer S.p.A., 48014 Castel Bolognese (IT)
(72) Inventor: CAVINI, Renzo, 48018 Faenza (IT); TESTA, Marco, 40026 Imola (IT); ZANELLI, Alessia, 48018 Faenza (IT)
(74) Representative: Boggio, Luigi
(86) International application number: PCT/IB2016/053441
(87) International publication number: WO 2016/199091

(56) References cited:
- EP-A1- 0 187 874
- CA-A1- 2 776 580

## Description

### TECHNICAL FIELD

The invention relates to a container for holding, on the inside, at least one receptacle containing, in turn, dangerous materials; in particular, the container according to the invention comprises a lower shell, which is closed by an upper lid, which is fixed to it through known fixing devices.

In particular, the invention finds advantageous, but not exclusive, application in the storage of dangerous materials to be permanently or temporarily stored in covered or underground spaces.

### BACKGROUND ART

As it is known, materials dangerous for the human health and for animals, besides being a hazard for the environment in general, can be subjected to different processes aimed at their recovery, reuse or to the reduction of their dangerousness (conditioning), but it is often impossible to completely eliminate them and, therefore, part of them is destined to a (temporary or final) storage in dedicated sites known as "landfill sites".

It is also known that a normal landfill site consists of at least three macro-elements:
1) a leachate collection system;
2) at least one low-permeability system, which is suited to prevent the leachate from leaking; and
3) an upper low-permeability cover, which limits - as much as possible - the infiltration of meteoric water or of possible surface runoff.

During the active phase of the landfill site, namely when waste is progressively deposited in the site, the final cover has not been positioned yet and waste is exposed to bad weather and atmospheric agents, among which there is also meteoric water, which can intensively increase the leachate.

Furthermore, the final storage (and often also the temporary storage) of hazardous waste involves the burial of containers made of different materials (drums, cans, tanks, etc., which, for the sake of simplicity, will be referred to as "drums"), which contain the dangerous substances to the stored, for the purpose of transporting them more easily, reducing the risk of volatility of the hazardous substances, and creating a primary waste containment.

Drums are usually made of a plastic material or metal, based on the hazardous substances to be contained and on the storage features to be obtained.

Plastic containers are usually used to store substances that can be corrosive for steel or incompatible with other types of containers.

On the other hand, carbon steel or stainless steel containers are used to hold substances that are compatible with other materials.

In landfill sites, drums are positioned in an orderly fashion, both on the ground and on different levels, so as to increase the volumetric capacity of the site (stacking) as much as possible.

Therefore, it is useful to also consider the mechanical behaviour of the drums stored and of the containers housing them on the inside.

As a consequence, the way in which the drums are arranged, besides ensuring the greatest storing density possible, must also fulfil mechanical resistance and stability requirements, regardless of the environmental conditions of the place where the landfill site is located.

Considering the stability of the waste mass irrespective of the surrounding conditions is a crucial aspect in landfill site management, especially during the active phase of the landfill site, both not to pollute the environment and to protect operators working in the landfill site.

The morphology and the technical solutions of the system used to eliminate the possible formation of leachate are aimed at preventing leachate agents in liquid, solid or gaseous form from leaking; however, the ability to always maintain these features could decrease over the years due to the action of external agents and of the waste itself upon the components of the landfill site.

The effects that can arise in time are a possible external leaching of the containers by atmospheric agents or a certain degradation of the drums due to the chemical and/or mechanical action of the materials contained inside the containers.

These conditions become more critical when operators use, as primary containers for the storage of dangerous materials, bags or containers with a flexible structure, which, despite being made of suitable materials, because of their flexible structure cannot ensure a sufficient mechanical resistance to compression or an adequate containment within the sealing systems.

This large-sized containers (commonly known as Big Bags) often contain powders, liquids or small-sized solid components. Documents EP 0 187 874 A1 and CA 2 776 580 A1 are disclosing containers with particular shapes for storing of waste containing hazardous waste.

### DISCLOSURE OF THE INVENTION

Therefore, the main object of this invention is to provide a container for holding, on the inside, at least one receptacle containing, in turn, dangerous materials, said container being suited to store, in an orderly, safe and economic fashion, hazardous waste in controlled landfill sites, irrespective of the hydraulic conductivity of the cover and of the coating system of the landfill site, thus ensuring an effective barrier protecting the dangerous materials contained therein, avoiding, furthermore, percolation through the waste.

This container was basically conceived as a secondary (but not exclusive) container to hold drums, cans, tanks and bags containing, in turn, dangerous materials, such as toxic waste, poisonous waste, carcinogenic waste, irritant waste, or even materials that have already been conditioned but are anyway dangerous or polluting if they are left in the environment.

According to the present invention, there is provided a container for tightly holding, on the inside, at least one receptacle containing, in turn, dangerous materials, for the purpose of permanent or temporary storage in a landfill site or in another suited space, according to the appended claims.

### BRIEF DESCRIPTION OF THE DRAWINGS

The invention will be best understood upon perusal of the following detailed description of a preferred embodiment, which is provided by way of example and is not limiting, with reference to the accompanying drawings, in which:
- figure 1 shows a three-dimensional view of a container according to the invention; said container being designed to hold, on the inside, in particular, toxic waste;
- figure 2 shows a plan view of the container of figure 1 ;
- figure 3 shows a three-dimensional view, with a vertical section, of the container of figure 1;
- figure 4 shows the container shown in figures 1 and 3 in a vertical section, which also displays some receptacles contained on the inside;
- figure 5 shows a container in a partial section, wherein the relative upper lid has been overturned and inserted into the relative lower shell;
- figure 6 shows a lower shell (in a vertical section) of the container according to the invention, housing, on the inside, a bag filled with waste, in particular toxic waste;
- figure 7 shows the lower shell of figure 5 together with the lid;
- figure 8 shows the vertical and horizontal coupling of some containers according to the invention;
- figure 9 shows some details of the coupling means of two containers on top of one another; and
- figure 10 shows, in a plan view, a septunx coupling of a plurality of containers according to the technical teaches of the invention.

### BEST MODE FOR CARRYING OUT THE INVENTION

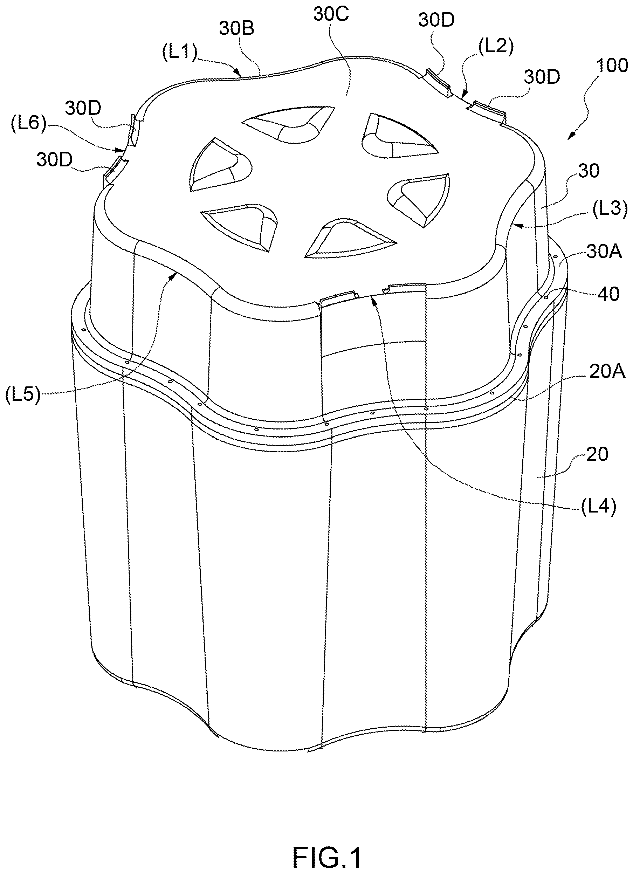

In figures 1-4, number 100 indicates, as a whole, a container for waste, in particular toxic waste, made according to the technical teaching of the present invention.

The container 100 comprises a lower shell 20 (flanged on the upper side), which is closed by a relative upper lid 30 (flanged on the lower side), which is fixed to it by means of known fixing device 40, for example bolts coupled to respective nuts.

In particular, each fixing device 40 can comprise a bolt and a relative nut screwed thereto; the stem of each bolt being inserted into two aligned holes, which are respectively made in an upper flange 20A of the lower shell 20 and in a lower flange 30A of the upper lid 30.

In actual use, as you can see in figure 1, the lower flange 30A of the upper lid 30 rests against the upper flange 20A of the lower shell 20.

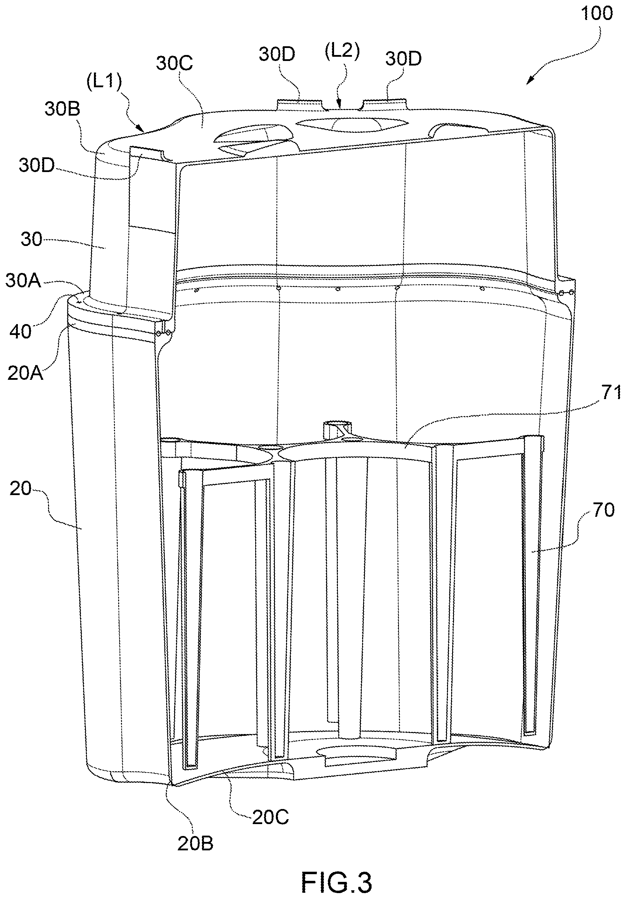

Furthermore, as you can see in figure 3, the container 100 is designed to hold, on the inside, a plurality of receptacles 50 containing, in turn, toxic waste (not shown).

In other words, a plurality of primary containers 50 (receptacles) are housed in a secondary container 100 (container). The primary containers 50, in turn, house, on the inside, toxic waste.

As already mentioned above, the container 100 and the receptacles 50 can be made of steel or plastic materials.

As you can see in figures 1-4, each container 100 has, in its plan view, the shape of a lobed polygon having six lobed, curvilinear sides (L1), (L2), (L3), (L4), (L5), (L6) with the same length.

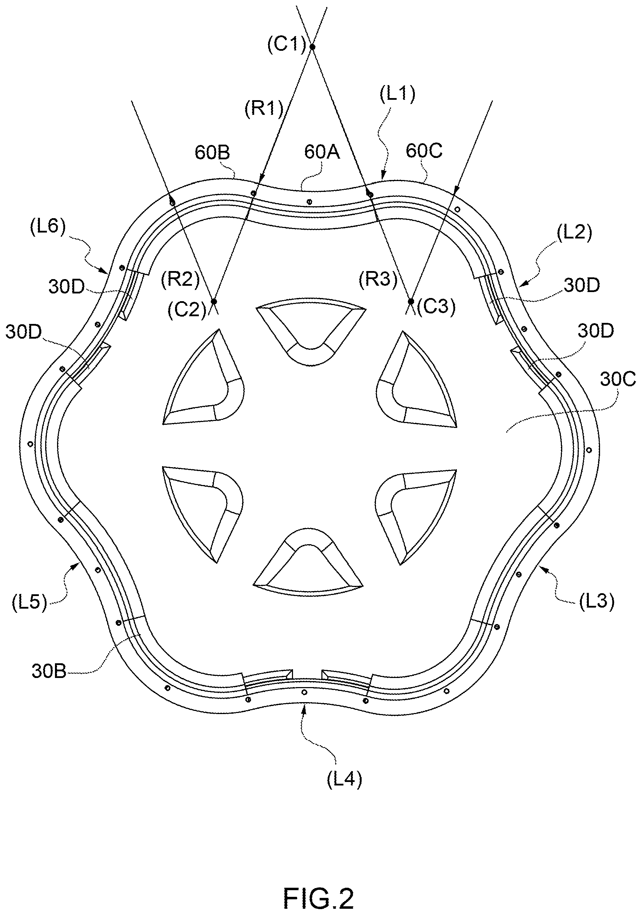

According to figure 2, each curvilinear side (L1), (L2), (L3), (L4), (L5), (L6) of the plan view of the container 100 comprises three curved portions 60A, 60B, 60C, wherein the central curved portion 60A has a bend radius (R1), whose centre (C1) of curvature is opposite to the centre (C2) of curvature (with radius (R2)) of the first lateral curved portion 60B and, respectively, is opposite to the centre (C3) of curvature (with radius (R3)) of the second lateral curved portion 60B.

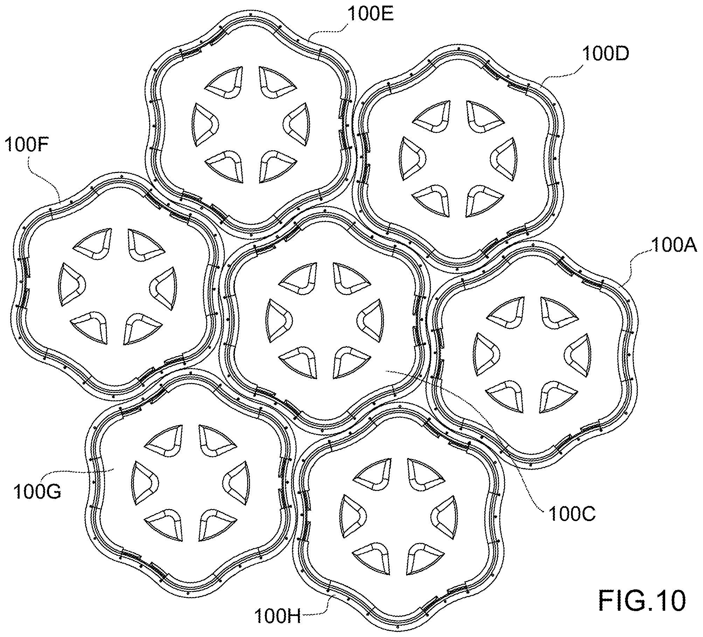

By so doing, you can obtain a lobed structure that can be combined with the adjacent ones, as shown in figure 10.

In other words, the portions projecting from each container 100 are coupled to the recessed portions of the adjacent containers 100 (male-female system).

This allows the containers 100 to be combined in an optimal manner, thus obtaining an ideal filling of the available space.

As a further consequence, thanks to the aforesaid combination of the surfaces of the containers, the containers 100 become more stable and, therefore, they will hardly move, for example even during the operations carried out to cover the landfill site with soil or sand.

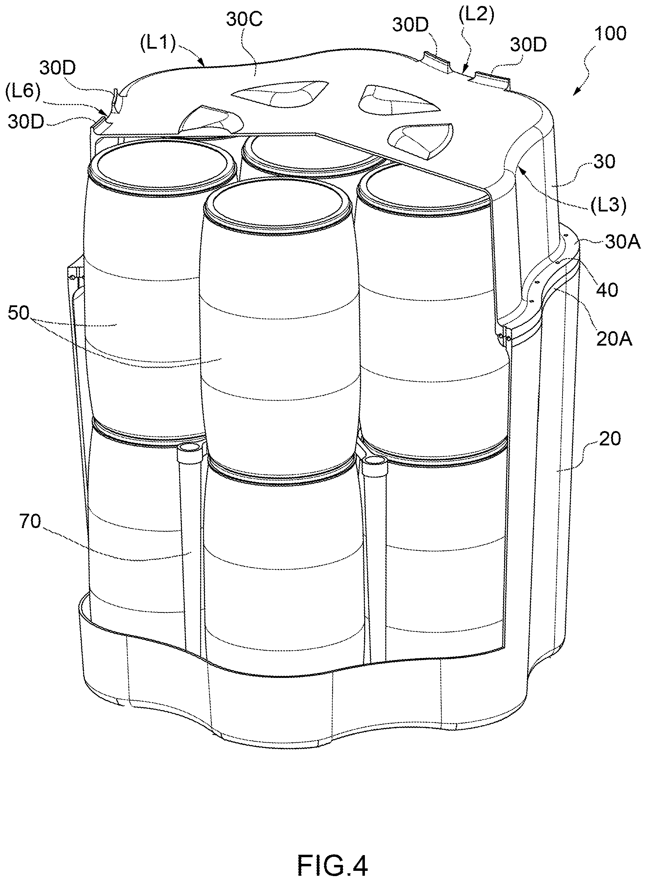

As shown in figure 4, each receptacle 50 is advantageously shaped as a barrel, whose outer surfaces are perfectly coupled to the recesses available on the inner surface of the container 100.

Furthermore, the receptacles 50 advantageously rest one top of one another, so as to increase the stability of each receptacle 50 on the inside of the container 100.

This aspect is highly important, as each receptacle 50 houses, on the inside, toxic (or anyway hazardous) materials and, therefore, it is necessary for the receptacles 50 not hit one another, so as to prevent them from breaking or forming cracks, which might lead to leaks of liquid and/or gaseous material into the environment.

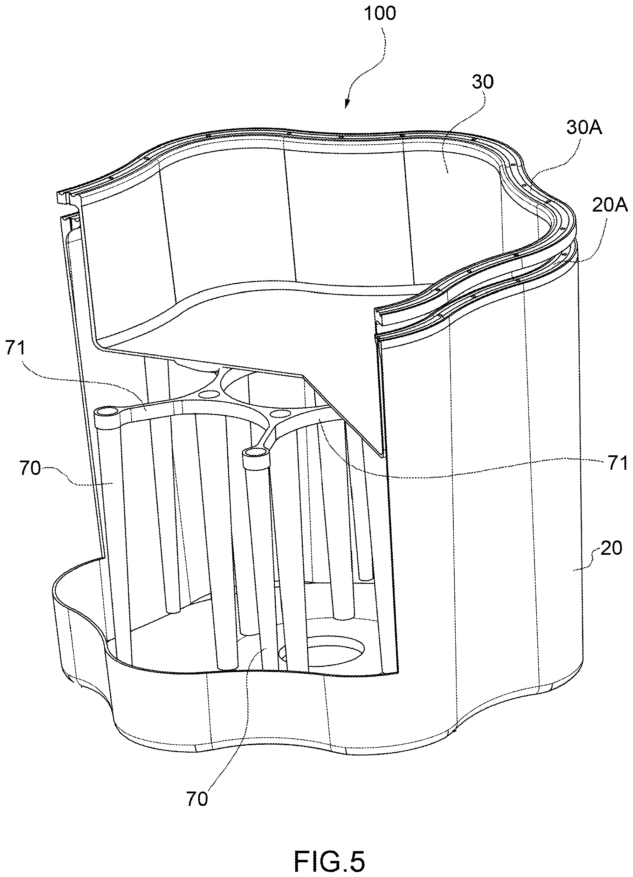

As you can see, more in detail, in figures 3, 4, 5, the receptacles 50 are kept in position (just in case on two levels) by a rack 70 (figure 5) comprising a plurality of seats 71.

Each seat 71 is shaped so as to lock, on the inside, a relative receptacle 50 or, if necessary, two receptacles stacked on top of one another, as you can see in figure 4.

In particular, the rack 70 is shaped in such a way that each seat 71 completely embraces a receptacle 50 placed on the lower level and only partially surrounds the receptacle 50 stacked on the corresponding receptacle 50 of the lower level.

Advantageously, the lower shell 20 and the upper lid 30 are tapered on opposite sides (the lower shell 20 is tapered downwards, whereas the upper lid 30 is tapered upwards), so as to allow the upper lid 30, when needed, to be overturned and inserted into the respective empty lower shell 20, as you can see in figure 5.

This enables a reduction of the height of the empty container 100, which can be very useful, for example, during the transportation of a plurality of empty containers 100.

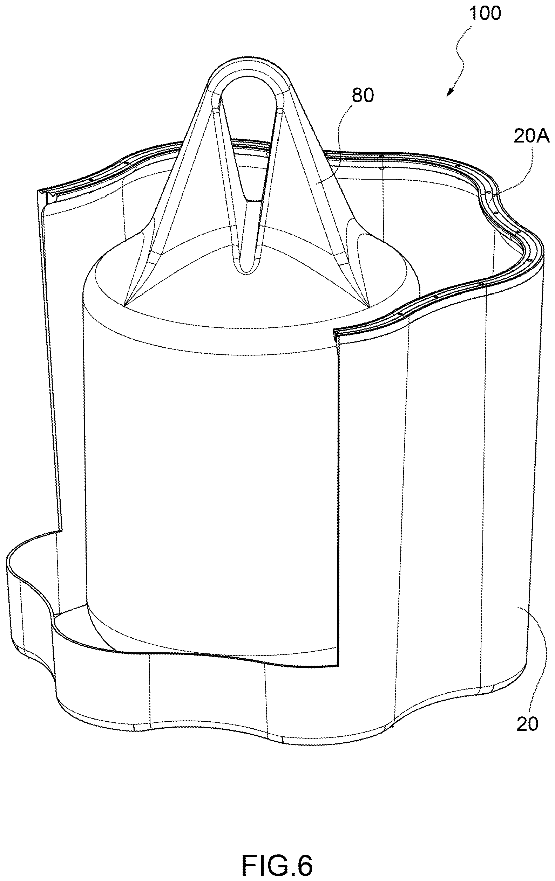

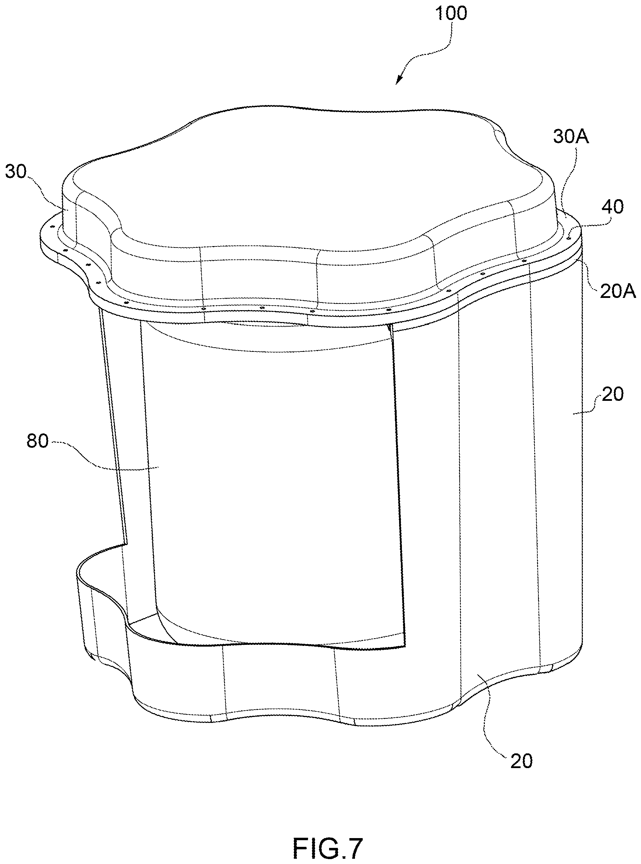

Figures 6 and 7 show that the container 100 can be used to hold a large-sized bag 80 (known as "Big Bag") containing, in turn, hazardous waste.

In such a case, the container 100 is not provided with a rack 70.

Another particular feature of the container 100 according to the present invention lies in the fact that the lid 30 is provided with means that are designed to receive and hold the bottom of an identical container 100 stacked on top of it.

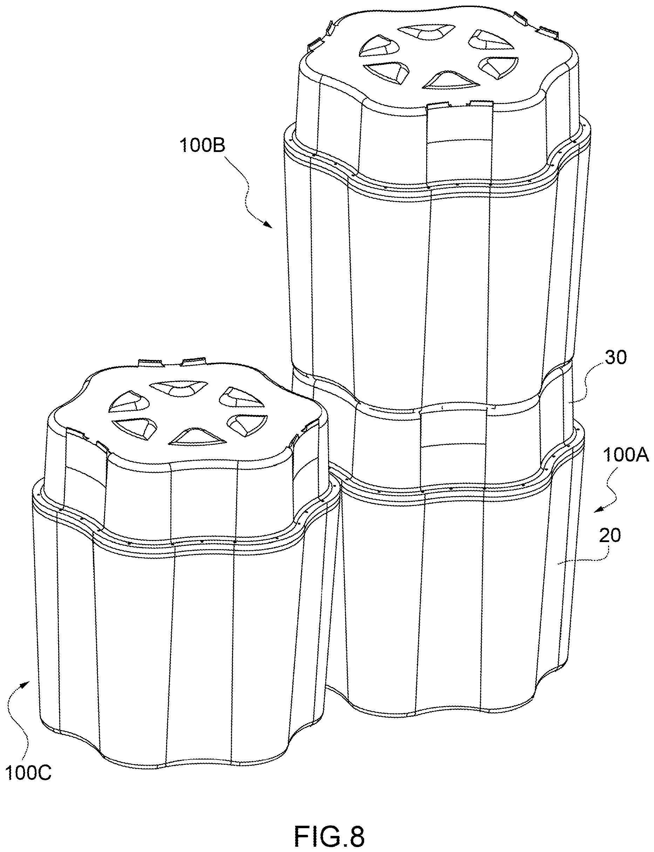

Figure 8, for example, shows a condition in which a second container 100B is stacked on top of a first container 100A.

Furthermore, the first container 100A is coupled, on the side, to an identical third container 100C thanks to the "male-female" system described above.

In particular, as you can see more in detail in figures 1, 4, 9, the edge 30B of the upper face 30C of the lid 30 is provided with clips 30D, which project from it and, in the embodiment shown in the aforesaid figures, are two for each one of the sides (L2), (L4), (L6).

Obviously, without going beyond the scope of protection of the invention, other similar solutions could be used to connect two stacked containers 100 to one another.

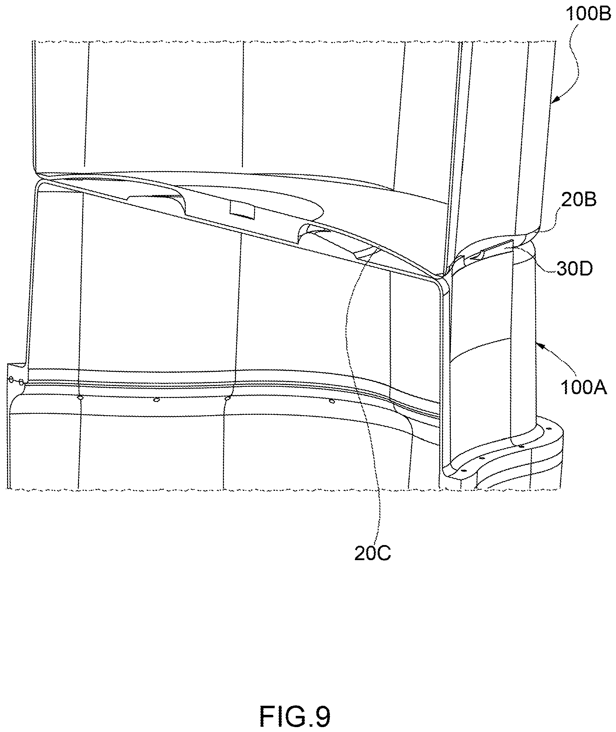

As you can see, more in detail, in figure 9, the clips 30D of the lower container 100A are used to receive and hold the curved edge 20B of the bottom 20C of the upper container 100B.

This helps ensure a great stability of the assembly made up of the container 100, the plurality of receptacles 50 and the rack 70.

Figure 10 shows a septunx arrangement of seven identical containers 100A, 100C, 100D, 100E, 100F, 100G, 100H. In particular, six containers 100A, 100D, 100E, 100F, 100G, 100H are arranged around and coupled to a central container 100C. For example, the container 100A, by means of the male-female system described above, is coupled to the adjacent containers 100C, 100D and 100H, as so on also for the remaining six identical containers 100C, 100D, 100E, 100F, 100G, 100H.

As it is known, the septunx arrangement ensures the maximum filling of a given space.

The system, as a whole, can also comprise one or more one-way valves with a suitable filter to permit the outlet of gases under pressure that can possibly be generated on the inside of the sealed container. Said gases can be present or not, depending on the type of waste stored on the inside.

Finally, even though the accompanying figures always show containers with a basically hexagonal lobed shaped, a person skilled in the art obviously understands that similar technical teaches can also be applied to any container having a polygonal lobed shape.

The main advantages of the containers according to the invention can be summed up as follows:
- they can be stacked on top of one another, both when they are empty and when they are fully filled;
- they can easily be coupled to one another (in their plan view) using a male-female connection;
- they ensure the greatest capability of filling a given surface with a septunx arrangement;
- they enable an increase in the resistance of the whole structure;
- they can easily be moved and positioned during the storage, both when they are empty and when they are fully filled, furthermore reducing - as much as possible - the volume needed by the containers that have not been used yet;
- they increase the modularity of the structure to hold both rigid containers of different types and flexible containers (Big Bags).

## Claims

1. A container (100) for holding, on the inside, at least one receptacle (50; 80) containing, in turn, dangerous waste;
said container (100) comprising a lower shell (20), which is closed by an upper lid (30), which is fixed to it through fixing means (40);
the container (100) is **characterized in that** it is shaped, in its plan view, as a lobed polygon having a plurality of curvilinear sides (L1), (L2), (L3), (L4), (L5), (L6); each curvilinear side (L1), (L2), (L3), (L4), (L5), (L6) comprising at least three respective curved portions (60A, 60B, 60C), wherein the central curved portion (60A) has a bend radius (R1), whose centre (C1) of curvature is opposite to the centre (C2) of curvature of said first lateral curved portion (60B) and, respectively, is opposite to the centre (C3) of curvature of said second lateral curved portion (60C).

2. Container (100), according to Claim 1, wherein said lower shell (20) and said upper lid (20) are tapered on opposite sides.

3. Container (100), according to anyone of the preceding Claims, wherein the outer surface is shaped so as to allow it to be horizontally or vertically coupled to an identical container (100).

4. Container (100), according to Claim 3, wherein the horizontal coupling to an identical container (100) takes place by means of a male-female coupling between the outer surfaces of the two adjacent containers (100).

5. Container (100), according to Claim 3, wherein the horizontal coupling to an identical container (100) takes place by means of a plurality of clips (30D) projecting upwards from the outer surface (30) of said upper lid (30).

6. Container (100), according to anyone of the preceding Claims, wherein a rack (70) is placed on the inside of the container (100), so as to allow a plurality of receptacles (50) to be steadily arranged on two levels.

7. Container (100), according to Claim 3, wherein said rack (70) comprises a plurality of seats (71); each seat (71) being designed to hold - and keep still - a pair of receptacles (50) arranged on top of one another.

8. Container (100), according to Claim 1, wherein it is designed to hold at least one bag (80).

9. A harmful waste containing system, **characterized in that** it comprises at least two containers (100A, 100C) claimed in anyone of the preceding Claims and coupled to one another by means of a male-female coupling; in particular, the mutual arrangement of the containers (100A, 100C) following a septunx pattern.

10. A harmful waste containing system, **characterized in that** it comprises at least two of the containers (100A, 100C) claimed in anyone of the Claims 1-8 stacked on top of one another.

## Patentansprüche

1. Container (100) zur Aufnahme, an der Innenseite, mindestens eines Behälters (50; 80), der wiederum gefährliche Abfälle enthält;
wobei der besagte Container (100) eine untere Schale (20) aufweist, welche durch einen oberen Deckel (30) verschlossen ist, welcher durch Befestigungsmittel (40) an ihm befestigt ist;
der Container (100) ist **dadurch gekennzeichnet, dass** er in seiner Draufsicht als gelapptes Polygon mit einer Vielzahl von krummlinigen Seiten (L1), (L2), (L3), (L4), (L5), (L6) geformt ist; wobei jede krummlinige Seite (L1), (L2), (L3), (L4), (L5), (L6) mindestens drei jeweilige gekrümmte Abschnitte (60A, 60B, 60C) aufweist, wobei der zentrale gekrümmte Abschnitt (60A) einen Krümmungsradius (R1) aufweist, dessen Krümmungsmittelpunkt (C1) dem Krümmungsmittelpunkt (C2) des besagten ersten seitlichen gekrümmten Abschnitts (60B) gegenüberliegt und entsprechend dem Krümmungsmittelpunkt (C3) des besagten zweiten seitlichen gekrümmten Abschnitts (60C) gegenüberliegt.

2. Container (100) nach Anspruch 1, wobei die besagte untere Schale (20) und der besagte obere Deckel (30) auf gegenüberliegenden Seiten verjüngt sind.

3. Container (100) nach einem der vorhergehenden Ansprüche, wobei die äußere Oberfläche so geformt ist, dass sie horizontal oder vertikal mit einem identischen Container (100) gekoppelt werden kann.

4. Container (100) nach Anspruch 3, wobei die horizontale Kopplung mit einem identischen Container (100) mittels einer männlich-weiblich Kopplung zwischen den äußeren Oberflächen der beiden benachbarten Container (100) stattfindet.

5. Container (100) nach Anspruch 3, wobei die horizontale Kopplung mit einem identischen Container (100) mittels einer Vielzahl von Klammern (30D) stattfindet, welche von der äußeren Oberfläche (30) des besagten oberen Deckels (30) nach oben ragen.

6. Container (100) nach einem der vorhergehenden Ansprüche, wobei ein Gestell (70) an der Innenseite des Containers (100) angeordnet ist, sodass eine Vielzahl von Behältern (50) auf zwei Ebenen gleichmäßig angeordnet werden können.

7. Container (100) nach Anspruch 3, wobei das Gestell (70) eine Vielzahl von Sitzen (71) aufweist, wobei jeder Sitz (71) so ausgebildet ist, dass er ein Paar von übereinander angeordneten Behältern (50) hält - und stillhält.

8. Container (100) nach Anspruch 1, wobei er dazu ausgebildet ist, mindestens eine Tasche (80) aufzunehmen.

9. Schadstoffabfallentsorgungssystem, **dadurch gekennzeichnet, dass** es mindestens zwei Container (100A, 100C) umfasst, die in einem der vorhergehenden Ansprüche beansprucht und mittels einer männlich-weiblich Kopplung miteinander gekoppelt sind; insbesondere die gegenseitige Anordnung der Container (100A, 100C) nach einem Septunx-Muster.

10. Schadstoffabfallentsorgungssystem, **dadurch gekennzeichnet, dass** es mindestens zwei der Container (100A, 100C) übereinander gestapelt umfasst, die in einem der Ansprüche 1-8 beansprucht sind.

## Revendications

1. Conteneur (100) pour contenir, à l'intérieur, au moins un réceptacle (50 ; 80) contenant à son tour, des déchets dangereux ;
ledit conteneur (100) comprenant une coque inférieure (20), qui est fermée par un couvercle supérieur (30) qui est fixé sur cette dernière par le biais de moyens de fixation (40) ;
le conteneur (100) est **caractérisé en ce qu'**il est formé, sur sa vue en plan, comme un polygone à lobe ayant une pluralité de côtés curvilignes (L1), (L2), (L3), (L4), (L5), (L6) ; chaque côté curviligne (L1), (L2), (L3), (L4), (L5), (L6) comprenant au moins trois parties incurvées (60A, 60B, 60C) respectives, dans lequel la partie incurvée centrale (60A) a un rayon de courbure (R1), dont le centre (C1) de courbure est opposé au centre (C2) de courbure de ladite première partie incurvée latérale (60B) et respectivement, est opposé au centre (C3) de courbure de ladite seconde partie incurvée latérale (60C).

2. Conteneur (100) selon la revendication 1, dans lequel ladite coque inférieure (20) et ledit couvercle supérieur (20) sont progressivement rétrécis sur les côtés opposés.

3. Conteneur (100) selon l'une quelconque des revendications précédentes, dans lequel la surface externe est formée afin de lui permettre d'être horizontalement ou verticalement couplée à un conteneur (100) identique.

4. Conteneur (100) selon la revendication 3, dans lequel le couplage horizontal à un conteneur identique (100) a lieu au moyen d'un couplage mâle - femelle entre les surfaces externes des deux conteneurs (100) adjacents.

5. Conteneur (100) selon la revendication 3, dans lequel le couplage horizontal à un conteneur (100) identique a lieu au moyen d'une pluralité d'attaches (30D) faisant saillie vers le haut à partir de la surface externe (30) dudit couvercle supérieur (30).

6. Conteneur (100) selon l'une quelconque des revendications précédentes, dans lequel un râtelier (70) est placé à l'intérieur du conteneur (100), afin de permettre d'agencer facilement une pluralité de réceptacles (50) sur deux niveaux.

7. Conteneur (100) selon la revendication 3, dans lequel ledit râtelier (70) comprend une pluralité de sièges (71) ; chaque siège (71) étant conçu pour supporter - et maintenir immobiles - une paire de réceptacles (50) agencés l'un sur l'autre.

8. Conteneur (100) selon la revendication 1, dans lequel il est conçu pour contenir au moins un sac (80).

9. Système de confinement de déchets dangereux **caractérisé en ce qu'**il comprend au moins deux conteneurs (100A, 100C) selon l'une quelconque des revendications précédentes et couplés entre eux au moyen d'un couplage mâle - femelle ; en particulier l'agencement mutuel des conteneurs (100A, 100C) suivant un modèle septunx.

10. Système de confinement de déchets dangereux, **caractérisé en ce qu'**il comprend au moins deux des conteneurs (100A, 100C) selon l'une quelconque des revendications 1 à 8, empilés l'un au-dessus de l'autre.
